# EUROPEAN PATENT APPLICATION

(11) **EP 4 484 806 A1**
(43) Date of publication of application: **01.01.2025**
(21) Application number: 23759330.6
(22) Date of filing: 27.02.2023
(51) Int. Cl.: F16K 1/38, F16K 1/42, F16K 1/54, F16K 1/00

(54) **FLOW ADJUSTMENT ASSEMBLY AND ELECTRONIC EXPANSION VALVE**

(30) Priority: 25.02.2022 CN 202220402572 U; 25.02.2022 CN 202220403806 U; 25.02.2022 CN 202220406752 U; 25.02.2022 CN 202220406277 U
(71) Applicant: Zhejiang Dunan Artificial Environment Co., Ltd., Shaoxing Zhejiang 311835 (CN)
(72) Inventor: HE, Yuchen, Shaoxing, Zhejiang 311835 (CN); XU, Guanjun, Shaoxing, Zhejiang 311835 (CN); KANG, Zhijun, Shaoxing, Zhejiang 311835 (CN)
(74) Representative: Zacco GmbH
(86) International application number: PCT/CN2023/078494
(87) International publication number: WO 2023/160709

(57) **Abstract**

A flow adjustment assembly and an electronic expansion valve. The flow adjustment assembly includes a valve head (10) and a sealing gasket (20), wherein the sealing gasket (20) is provided with a communication channel (201), and the valve head (10) may move relative to the sealing gasket (20), so as to adjust the flow of a medium in the communication channel (201); the valve head (10) is provided with a sealing surface (11) and a first matching surface (12), and the sealing gasket (20) is provided with a sealing matching surface (21) and a second matching surface (22); as the valve head (10) moves relative to the sealing gasket (20), a circulation area between the sealing surface (11) and the second matching surface (22) may be adjusted to control the flow of the medium in the communication channel (201); and moreover, under the driving of the valve head (10), the second matching surface (22) may extend into the communication channel (201), so as to perform flow guidance on the medium passing through the second matching surface (22) and the sealing surface (11). Therefore, surface-to-surface sealing between the valve head and the sealing gasket is implemented, flow adjustment of the flow adjustment assembly at a small flow may be implemented by controlling the circulation between the sealing surface and the second matching surface, and meanwhile, the first matching surface may achieve the effects of guiding the flow and reducing the flow resistance, and particularly reducing the flow resistance at the maximum opening degree.

## Description

### Cross-Reference to Related Application

The present application claims the priority of Chinese Patent Application 202220402572.2, filed in the State Intellectual Property Office of China on February 25, 2022, and entitled "Flow Adjustment Assembly and Electronic Expansion Valve";
the present application claims the priority of Chinese Patent Application 202220403806.5, filed in the State Intellectual Property Office of China on February 25, 2022, and entitled "Flow Adjustment Assembly and Electronic Expansion Valve";
the present application claims the priority of Chinese Patent Application 202220406752.8, filed in the State Intellectual Property Office of China on February 25, 2022, and entitled "Electronic Expansion Valve"; and
the present application claims the priority of Chinese Patent Application 202220406277.4, filed in the State Intellectual Property Office of China on February 25, 2022, and entitled "Electronic Expansion Valve".

### Technical Field

The present invention belongs to the field of related arts of flow control, and particularly relates to a flow adjustment assembly and an electronic expansion valve.

### Background

In an electronic expansion valve, a valve head changes a circulation area by changing a relative position with a second matching surface for a flow of an inner wall of a valve port, thereby implementing flow adjustment. A flow characteristic curve is a relationship between a flow of the electronic expansion valve and an opening degree of the valve port (that is, a moving distance of the valve head). In an actual use process, different systems and different usage working conditions have different requirements for flow adjustment.

At present, an existing electronic expansion valve usually utilizes a bell-mouth wire sealing structure to implement flow blocking, which is specifically implemented by a taper angle of the valve port on the valve head abutting against a sealing gasket. However, the working reliability of the above sealing structure is poor, a variation of the sealing gasket due to a temperature is greater than a variation of the valve head, which may lead to a "locking" phenomenon of the valve head when changing from a high temperature to a low temperature, so that the valve opening resistance is increased, a flow curve offset may also be caused, and the above sealing structure cannot implement flow adjustment of the electronic expansion valve at a small flow.

### Summary

In view of this, it is necessary to provide a flow adjustment assembly and an electronic expansion valve for solving the above technical problems.

A flow adjustment assembly, including a valve head and a sealing gasket, wherein the sealing gasket is provided with a communication channel, and the valve head is able to move relative to the sealing gasket, so as to adjust a flow of a medium in the communication channel;
the valve head is provided with a sealing surface and a first matching surface, and the sealing gasket is provided with a sealing matching surface and a second matching surface; and
as the valve head moves relative to the sealing gasket, a circulation area between the sealing surface and the second matching surface is able to be adjusted to control the flow of the medium in the communication channel; and moreover, under the driving of the valve head, the first matching surface is able to extend into the communication channel, so as to perform flow guidance on the medium passing between the second matching surface and the sealing surface.

It can be understood that, by the structural settings of the sealing surface, the first matching surface, the sealing matching surface and the second matching surface, when the flow adjustment assembly works, a surface-to-surface sealing between the valve head and the sealing gasket is able to be implemented by using an abutment between the sealing surface and the sealing matching surface, flow adjustment of the flow adjustment assembly at a small flow is able to be implemented by controlling the circulation area between the sealing surface and the second matching surface, and meanwhile, the first matching surface is able to achieve the effects of guiding the flow and reducing the flow resistance, and particularly reducing the flow resistance at a maximum opening degree.

In one embodiment, the second matching surface is disposed on a periphery of the first matching surface in an axial direction of the sealing gasket.

It can be understood that, the second matching surface is disposed on the periphery of the first matching surface, so as to specifically implement position settings of the second matching surface on the sealing gasket and the first matching surface on the valve head, thereby ensuring that the first matching surface is able to play a flow guidance role on the medium passing between the second matching surface and the sealing surface.

In one embodiment, both the first matching surface and the second matching surface are set to be inclined plane structures, and an inclination angle of the first matching surface is greater than an inclination angle of the second matching surface relative to an axis of the sealing gasket.

It can be understood that, by structural settings of the first matching surface and the second matching surface, the structural settings of the second matching surface on the sealing gasket and the first matching surface on the valve head are specifically implemented, so as to meet the usage requirements that the second matching surface is able to cooperate with the sealing surface on the valve head to implement flow adjustment at a small flow, and that the first matching surface is able to guide the flow and reduce the flow resistance.

In one embodiment, the second matching surface includes a plurality of first adjustment subsection surfaces, and the plurality of first adjustment subsection surfaces are sequentially connected.

It can be understood that one embodiment of the second matching surface is implemented by the structural settings of the plurality of the first adjustment subsection surfaces.

In one embodiment, the inclination angle of the first matching surface relative to the axis of the sealing gasket is greater than 50° and less than 80°.

It can be understood that, by setting the inclination angle of the first matching surface, an angle setting of the first matching surface is specifically implemented, so as to meet the usage requirements that the first matching surface guides the flow of the medium passing between the second matching surface and the sealing surface.

In one embodiment, both the sealing surface and the sealing matching surface are set to be planar structures.

It can be understood that, by the above structural settings, the structural settings of the sealing surface and the sealing matching surface are specifically implemented.

In one embodiment, the second matching surface is disposed on a periphery of the sealing matching surface.

It can be understood that, by the above structural settings, a positional relationship between the second matching surface and the sealing matching surface on the sealing gasket is specifically implemented.

In one embodiment, the sealing gasket is provided with an avoidance notch, and the avoidance notch is formed in a position where the sealing matching surface is connected with a communication channel wall of the communication channel.

It can be understood that, by the structural settings of the avoidance notch, the flow guidance effect of the first matching surface for the medium passing between the second matching surface and the sealing surface is further ensured, and meanwhile, an effect on the surface-to-surface sealing by a generation of burrs or flanges during a machining of the position is avoided.

In one embodiment, the valve head is provided with an avoidance groove, and the avoidance groove is formed in a position between the sealing surface and the first matching surface.

It can be understood that, by the structural settings of the avoidance groove, surface-to-surface sealing is able to be realized, and when burrs or flanges are generated during the machining of the valve head, avoidance is performed on the burrs or flanges to avoid affecting the surface-to-surface sealing effect.

The present invention further provides an electronic expansion valve, including a valve body and a flow adjustment assembly, wherein the flow adjustment assembly is installed on the valve body, and the flow adjustment assembly is set to be any one of the flow adjustment assemblies described above.

It can be understood that, by reasonable structural settings of the flow adjustment assembly, the electronic expansion valve implements surface-to-surface contact sealing, thereby ensuring the sealing effect of the electronic expansion valve during operation, and meanwhile enabling the electronic expansion valve to implement flow adjustment at a small flow.

### Brief Description of the Drawings

Fig. 1 is a schematic structural diagram of an electronic expansion valve provided in Embodiment 1 of the present invention.
Fig. 2 is a schematic structural diagram of a flow adjustment assembly provided in Embodiment 1 of the present invention.
Fig. 3 is a partial schematic structural diagram of a valve head in Embodiment 1 of the present invention.
Fig. 4 is a schematic structural diagram of a sealing gasket in Embodiment 1 of the present invention.
Fig. 5 is a schematic structural diagram of an electronic expansion valve provided in Embodiment 2 of the present invention.
Fig. 6 is a schematic structural diagram of a flow adjustment assembly provided in Embodiment 2 of the present invention.
Fig. 7 is a partial schematic structural diagram of a valve head in Embodiment 2 of the present invention.
Fig. 8 and Fig. 9 are partial schematic structural diagram of a valve head in another embodiment of the present invention.
Fig. 10 is a schematic structural diagram of a sealing gasket in Embodiment 2 of the present invention.
Fig. 11 illustrates a schematic structural diagram of an electronic expansion valve provided in Embodiment 3 of the present invention.
Fig. 12 illustrates a schematic structural diagram of a sealing gasket provided in Embodiment 3 of the present invention.
Fig. 13 illustrates a schematic structural diagram of an electronic expansion valve provided in Embodiment 4 of the present invention.
Fig. 14 illustrates a schematic structural diagram of a valve body provided in Embodiment 4 of the present invention.
Fig. 15 illustrates a schematic structural diagram of a valve head provided in Embodiment 4 of the present invention.
Fig. 16 illustrates a schematic structural diagram of an electronic expansion valve provided in Embodiment 5 of the present invention.
Fig. 17 illustrates a schematic structural diagram of a valve body provided in Embodiment 5 of the present invention.
Fig. 18 illustrates a schematic structural diagram of a valve head provided in Embodiment 5 of the present invention.
Fig. 19 illustrates a schematic structural diagram of a pressing sleeve provided in Embodiment 5 of the present invention.

The above drawings include the following reference signs:
10. valve head; 101. connecting end; 102. blocking end;
11. sealing surface;
12. first matching surface; 121. second adjustment subsection surface;
13. avoidance groove;
20. sealing gasket; 201. communication channel; 2011. communication channel wall;
21. sealing matching surface;
22. second matching surface;
23. avoidance notch;
200. valve body;
31. valve casing;
32. valve seat; 321. accommodating groove; 301. valve cavity;
323. first end of the valve seat; 3231. annular protrusion; 324. second end of the valve seat;
325. first hole section; 236. second hole section;
327. body; 328. seat body;
40. first circulation channel; 401. connecting pipe;
41. transition section; 411. first end of the transition section; 412. second end of the transition section;
42. connecting section;
402. second circulation channel;
50. nut seat; 51. threaded hole; 52. connecting hole;
60. screw rod; 71. first end of the valve head; 72. second end of the valve head;
73. valve head body; 731. first end of the valve head body; 732. second end of the valve head body;
74. pressing sleeve; 741. first stepped section; 742. second stepped section; 7421. second annular protrusion; 743. through hole;
80. rotation stop structure; 81. limiting hole; 82. limiting rod; 83. first rotation stop surface; 84. second rotation stop surface; 85. rotation stop groove; and
90. bearing.

### Detailed Description of the Embodiments

A clear and complete description of technical solutions in the embodiments of the present application will be given below, in combination with the drawings in the embodiments of the present application. Apparently, the embodiments described below are merely a part, but not all, of the embodiments of the present application. All of other embodiments, obtained by those ordinary skilled in the art based on the embodiments in the present application without any creative effort, fall into the protection scope of the present application.

It should be noted that, when one element is referred to as being "disposed on" another element, the element may be directly disposed on the other element or there may be an intermediate element. When one element is considered to be "disposed on" another element, the element may be directly disposed on the other element or there may be an intermediate element at the same time. When one element is considered to be "fixed to" another element, the element may be directly fixed to the other element or there may be an intermediate element at the same time.

Unless otherwise defined, all technical and scientific terms used herein have the same meanings as commonly understood by those skilled in the art to which the present application belongs. The terms used in the specification of the present application are merely for the purpose of describing specific embodiments, and are not intended to limit the present application. As used herein, the term "and/or" includes any and all combinations of one or more of associated listed items.

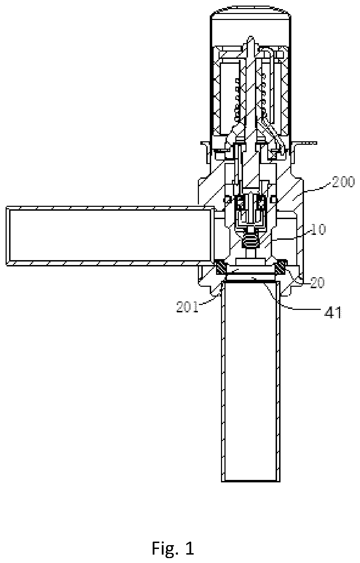

As shown in Fig. 1, an electronic expansion valve provided in Embodiment 1 of the present invention includes a valve body 200 and a flow adjustment assembly, wherein the flow adjustment assembly is installed on the valve body 200 to perform flow adjustment on a medium on the valve body 200, which passes through a transition section 41 of the valve body 200, so as to achieve a purpose of flow adjustment when the electronic expansion valve works.

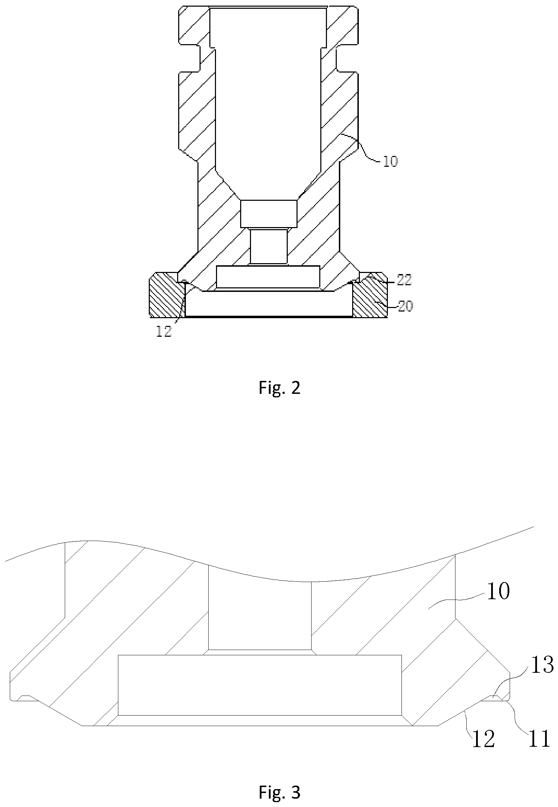

As shown in Fig. 2 to Fig. 4, the flow adjustment assembly of the electronic expansion valve provided in Embodiment 1 of the present invention includes a valve head 10 and a sealing gasket 20, wherein the sealing gasket 20 is provided with a communication channel 201, and the valve head 10 is able to move relative to the sealing gasket 20, so as to adjust a flow of the medium in the communication channel 201. It should be noted that, when the flow adjustment assembly is applied to the electronic expansion valve, the sealing gasket 20 in the flow adjustment assembly is installed at a position where the transition section 41 of the valve body 200 is located, and the communication channel 201 is in communication with the transition section 41, so that the valve head 10 adjusts the flow of the communication channel 201 on the sealing gasket 20, that is, the flow of the medium is able to be adjusted when the electronic expansion valve works.

In one embodiment, the valve head 10 of the embodiment is provided with a sealing surface 11 and a first matching surface 12, the sealing gasket 20 is provided with a sealing matching surface 21 and a second matching surface 22, and as the valve head 10 moves relative to the sealing gasket 20, a circulation area between the sealing surface 11 and the second matching surface 22 is able to be adjusted to control the flow of the medium in the communication channel 201; and moreover, under the driving of the valve head 10, the first matching surface 12 is able to extend into the communication channel 201, so as to perform flow guidance on a medium passing between the second matching surface 22 and the sealing surface 11. It should be noted that the circulation area specifically refers to a minimum area of the communication channel for enabling the medium between the sealing surface 11 and the second matching surface 22 to pass through.

As can be seen from the above description, when the flow adjustment assembly works, a surface-to-surface sealing between the valve head 10 and the sealing gasket 20 is able to be implemented by abutting fit between the sealing surface 11 and the sealing matching surface 21, flow adjustment of the flow adjustment assembly at a small flow is able to be implemented by controlling a distance between the sealing surface 11 and the second matching surface 22, and meanwhile, the first matching surface 12 is able to achieve the effects of guiding the flow and reducing the flow resistance, and particularly reducing the flow resistance at a maximum opening degree.

The second matching surface 22 is disposed on a periphery of the first matching surface 12 in an axial direction of the sealing gasket 20, so as to specifically implement position settings of the second matching surface 22 on the sealing gasket 20 and the first matching surface 12 on the valve head 10, thereby ensuring that the first matching surface 12 is able to play a flow guidance role on the medium passing between the second matching surface 22 and the sealing surface 11.

In the present embodiment, both the first matching surface 12 and the second matching surface 22 are set to be inclined plane structures, and an inclination angle of the first matching surface 12 is greater than an inclination angle of the second matching surface 22 relative to an axis of the sealing gasket 20, so as to specifically implement structural settings of the second matching surface 22 on the sealing gasket 20 and the first matching surface 12 on the valve head 10, thereby meeting the usage requirements that the second matching surface 22 is able to cooperate with the sealing surface 11 on the valve head 10 to implement flow adjustment at a small flow, and that the first matching surface 12 is able to guide the flow and reduce the flow resistance.

It should be noted that, the second matching surface 22 includes a plurality of first adjustment subsection surfaces, and the plurality of the first adjustment subsection surfaces are sequentially connected, that is, an inclination angle of each of the plurality of the first adjustment subsection surfaces is different, so that two adjacent first adjustment subsection surfaces are connected at a certain angle. Of course, the second matching surface 22 is also able to be set as a complete inclined plane, which will not be described herein.

Secondly, the inclination angle of the first matching surface 12 relative to the axis of the sealing gasket 20 is greater than 50° and less than 80°, in some embodiments, the inclination angle of the first matching surface 12 is able to be set to be 60° to specifically implement the angle setting of the first matching surface 12, so as to meet the usage requirements that an first matching surface 12 performs flow guidance on the medium passing between the second matching surface 22 and the sealing surface 11.

In the present embodiment, both the sealing surface 11 and the sealing matching surface 21 are set to be planar structures, so as to specifically implement the structural settings of the sealing surface 11 and the sealing matching surface 21. It should be noted that the sealing surface 11 and the sealing matching surface 21 are not limited to be illustrated, and for those skilled in the art, the sealing surface 11 and the sealing matching surface 21 are able to be set to be inclined planes which cooperate with each other, which will not be described herein.

The second matching surface 22 is disposed on a periphery of the sealing matching surface 21, so as to specifically implement a positional relationship between the second matching surface 22 and the sealing matching surface 21 on the sealing gasket 20.

In addition, the sealing gasket 20 is provided with an avoidance notch 23, and the avoidance notch 23 is formed in a position where the sealing matching surface 21 is connected with a communication channel wall 2011 of the communication channel 201, so as to increase a space between the first matching surface 12 on the valve head 10 and the sealing gasket 20, thereby ensuring that the first matching surface 12 performs flow guidance on the medium passing between the second matching surface 22 and the sealing surface 11, and meanwhile avoiding an effect on surface-to-surface sealing by a generation of burrs or flanges during a machining of the position.

In the present invention, the valve head 10 is provided with an avoidance groove 13, and the avoidance groove 13 is formed in a position between the sealing surface 11 and the first matching surface 12. Therefore, surface-to-surface sealing is able to be realized, and when burrs or flanges are generated during the machining of the valve head 10, avoidance is performed on the burrs or flanges to avoid affecting the surface-to-surface sealing effect.

In summary, the electronic expansion valve applying the flow adjustment assembly implements surface-to-surface contact sealing, thereby ensuring the sealing effect of the electronic expansion valve during operation, and meanwhile enabling the electronic expansion valve to implement flow adjustment at a small flow.

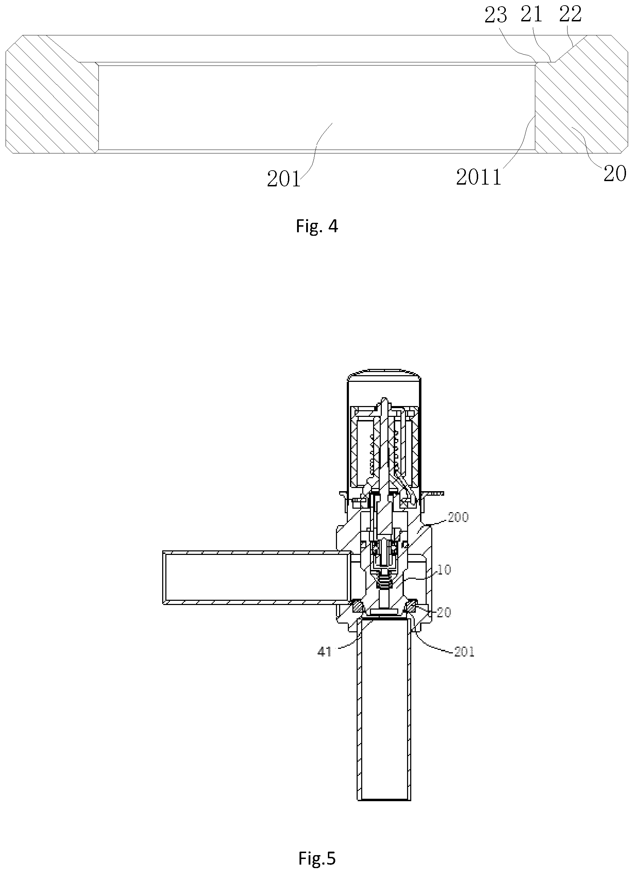

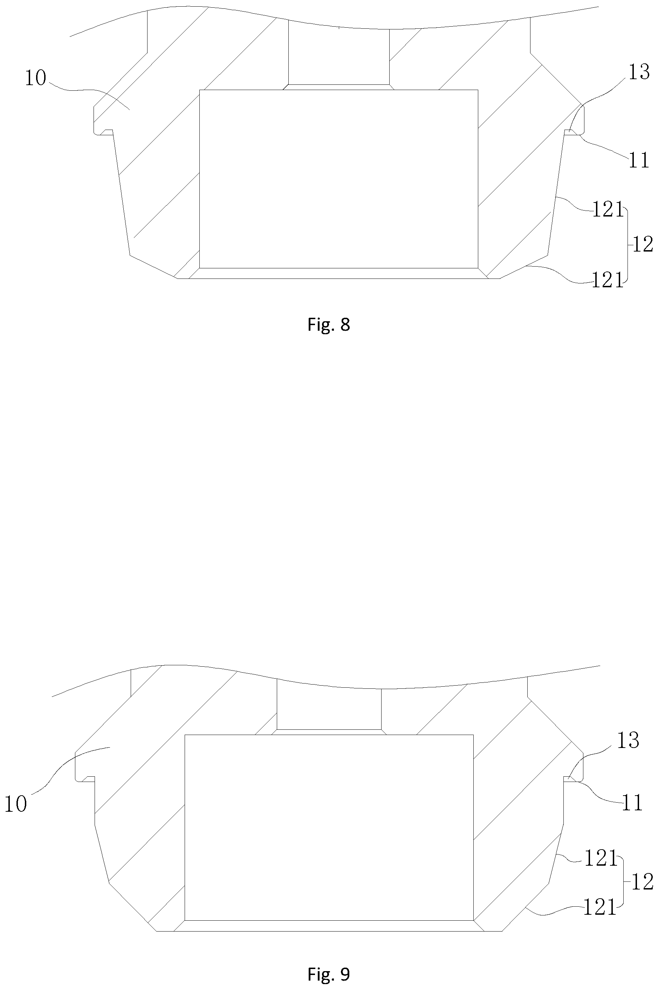

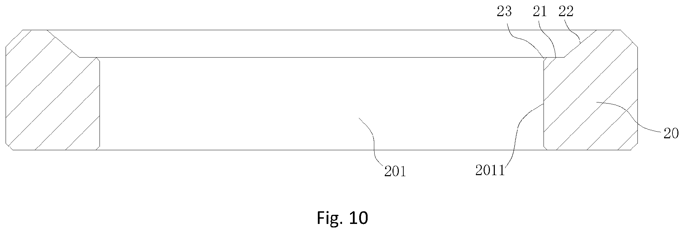

As shown in Fig. 5 to Fig. 10, an electronic expansion valve provided in Embodiment 2 of the present invention includes a valve body 200 and a flow adjustment assembly, wherein the flow adjustment assembly is installed on the valve body 200 to perform flow adjustment on a medium on the valve body 200, which passes through a transition section 41 of the valve body 200, so as to achieve a purpose of flow adjustment when the electronic expansion valve works.

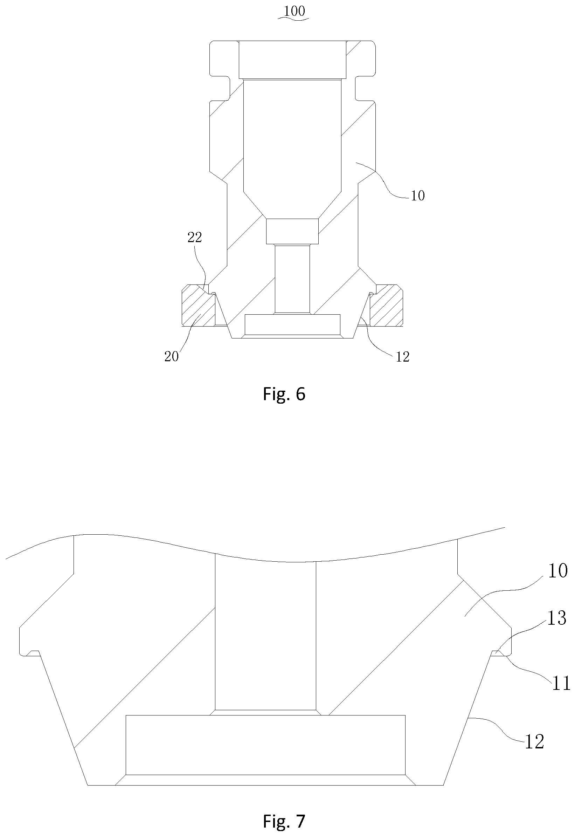

As shown in Fig. 6 to Fig. 10, the flow adjustment assembly of the electronic expansion valve provided in Embodiment 2 of the present invention includes a valve head 10 and a sealing gasket 20, wherein the sealing gasket 20 is provided with a communication channel 201, and the valve head 10 is able to move relative to the sealing gasket 20, so as to adjust a flow of the medium in the communication channel 201. It should be noted that, when the flow adjustment assembly is applied to the electronic expansion valve, the sealing gasket 20 in the flow adjustment assembly is installed at a position where the transition section 41 of the valve body 200 is located, and the communication channel 201 is in communication with the transition section 41, so that the valve head 10 adjusts a flow of the communication channel 201 on the sealing gasket 20, that is, the flow of the medium is able to be adjusted when the electronic expansion valve works.

In one embodiment, the valve head 10 of the embodiment is provided with a sealing surface 11 and a first matching surface 12, the sealing gasket 20 is provided with a sealing matching surface 21 and a second matching surface 22, and as the valve head 10 moves relative to the sealing gasket 20, the first matching surface 12 may be driven to extend into the communication channel 201, and a circulation area between the first matching surface 12 and the sealing matching surface 21 is adjusted to control the flow of the medium in the communication channel 201; and moreover, under the driving of the valve head 10, the valve head 10 is able to block the communication channel 201 by the abutting fit between the sealing surface 11 and the sealing matching surface 21, and the second matching surface 22 is able to perform flow guidance on the medium which passes between the first matching surface 12 and the sealing matching surface 21 and enters the communication channel 201. It should be noted that the circulation area specifically refers to a minimum area of the communication channel for enabling the medium between the first matching surface 12 and the sealing matching surface 21 to pass through.

As can be seen from the above description, when the flow adjustment assembly works, a surface-to-surface sealing between the valve head 10 and the sealing gasket 20 is able to be implemented by abutting fitt between the sealing surface 11 and the sealing matching surface 21, flow adjustment of the flow adjustment assembly at a small flow is able to be implemented by controlling the circulation area between the first matching surface 12 and the sealing matching surface 21, and meanwhile, the first matching surface 12 is able to achieve the effects of guiding the flow and reducing the flow resistance, and particularly reducing the flow resistance at a maximum opening degree.

The second matching surface 22 is disposed on a periphery of the first matching surface 12 in an axial direction of the sealing gasket 20, so as to specifically implement position settings of the second matching surface 22 on the sealing gasket 20 and the first matching surface 12 on the valve head 10, thereby ensuring that the second matching surface 22 is able to play a flow guidance role on the medium entering between the first matching surface 12 and the sealing matching surface 21.

In the present embodiment, both the first matching surface 12 and the second matching surface 22 are set to be inclined plane structures, and an inclination angle of the second matching surface 22 is greater than an inclination angle of the first matching surface 12 relative to an axis of the sealing gasket 20, so as to specifically implement structural settings of the second matching surface 22 on the sealing gasket 20 and the first matching surface 12 on the valve head 10, thereby meeting the usage requirements that the first matching surface 12 is able to cooperate with the sealing matching surface 21 on the sealing gasket 20 to implement flow adjustment at a small flow, and that the second matching surface 22 is able to guide the flow and reduce the flow resistance.

Specifically, the first matching surface 12 is set to be a complete inclined plane, thereby simplifying the structure and facilitating the production and preparation of the valve head 10.

It should be noted that the first matching surface 12 is not limited to the above overall inclined plane structure, and for those skilled in the art, the first matching surface 12 includes a plurality of second adjustment subsection surfaces 121, and the plurality of the second adjustment subsection surfaces 121 are sequentially connected, that is, an inclination angle of each of the plurality of the second adjustment subsection surfaces 121 is different, so that two adjacent second adjustment subsection surfaces 121 are connected at a certain angle.

In the present invention, both the sealing surface 11 and the sealing matching surface 21 are set to be planar structures, so as to specifically implement the structural settings of the sealing surface 11 and the sealing matching surface 21. It should be noted that the sealing surface 11 and the sealing matching surface 21 are not limited to be illustrated, and for those skilled in the art, the sealing surface 11 and the sealing matching surface 21 are able to be set to be inclined planes which cooperate with each other, which will not be described herein.

The second matching surface 22 is disposed on a periphery of the sealing matching surface 21, so as to specifically implement a positional relationship between the second matching surface 22 and the sealing matching surface 21 on the sealing gasket 20.

Of course, the second matching surface 22 is not limited to the inclined plane described above, and for those skilled in the art, the second matching surface 22 is able to be set to be a planar structure, so as to specifically implement one embodiment of the second matching surface 22.

In addition, in the present invention, the sealing gasket 20 is provided with an avoidance notch 23, and the avoidance notch 23 is formed in a position where the sealing matching surface 21 is connected with a communication channel wall 2011 of the communication channel 201, so as to increase a space between the first matching surface 12 on the valve head 10 and the sealing gasket 20, thereby ensuring that the medium is able to, under the flow guidance of the second matching surface 22, pass tbetween the first matching surface 12 and the sealing matching surface 21 and enter the communication channel 201, and meanwhile avoiding an effect on surface-to-surface sealing by a generation of burrs or flanges during a machining of the position.

In the present invention, the valve head 10 is provided with an avoidance groove 13, and the avoidance groove 13 is formed in a position between the sealing surface 11 and the first matching surface 12. Therefore, surface-to-surface sealing is able to be realized, and when burrs or flanges are generated during the machining of the valve head 10, avoidance is performed on the burrs or flanges to avoid affecting the surface-to-surface sealing effect.

In summary, the electronic expansion valve applying the flow adjustment assembly implements surface-to-surface contact sealing, thereby ensuring the sealing effect of the electronic expansion valve during operation, and meanwhile enabling the electronic expansion valve to implement flow adjustment at a small flow.

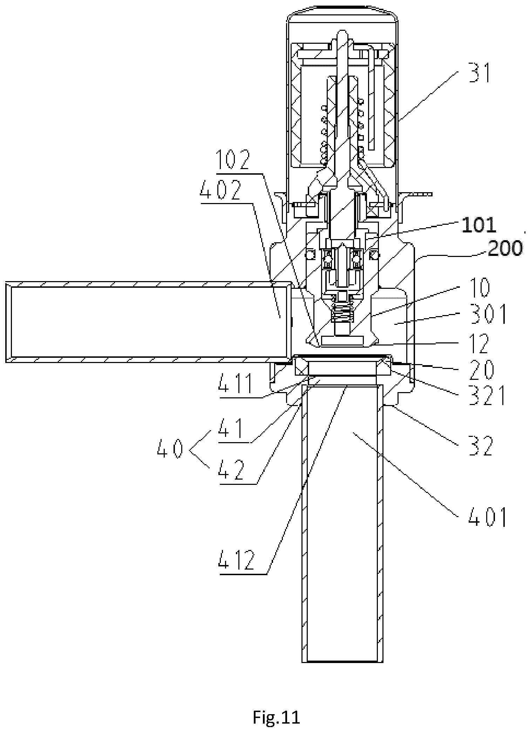

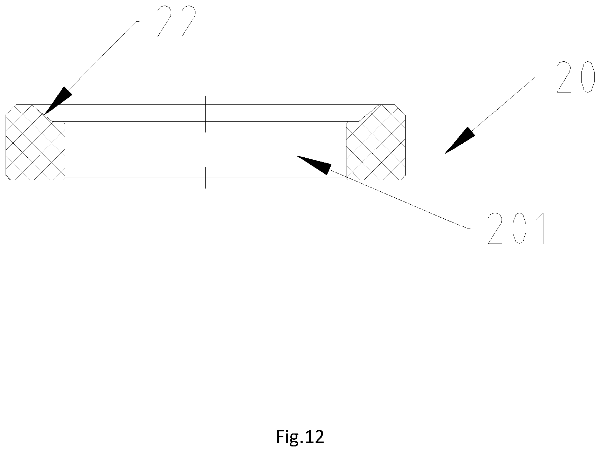

As shown in Fig. 11 and Fig. 12, an electronic expansion valve provided in Embodiment 3 of the present invention includes a valve body 200 and the flow adjustment assembly of the electronic expansion valve in Embodiment 1, wherein the valve body 200 includes a valve casing 31 and a valve seat 32; the valve seat 32 is connected with the valve casing 31, the valve seat 32 cooperates with the valve casing 31 to form a valve cavity 301, a bottom of the valve seat 32 is provided with a first circulation channel 40, the first circulation channel 40 is in communication with the valve cavity 301, the first circulation channel 40 includes a transition section 41, the transition section 41 includes a first end and a second end, which are disposed opposite to each other, the first end 411 of the transition section is disposed close to the valve cavity 301, and a diameter of the transition section 41 gradually changes in a direction away from the valve cavity 301; and the sealing gasket 20 is disposed on a side of the transition section 41 that is close to the valve cavity 301, the sealing gasket 20 is provided with a communication channel 201, and the communication channel 201 is in communication with the first circulation channel 40. In some embodiments, the communication channel 201 is able to be connected with the first end 411 of the transition section. In some embodiments, a circulation section is also able to be disposed on the diameters of the communication channel 201 and the transition section 41, and a diameter of the circulation section is equal to a diameter of the communication channel 201. In some embodiments, the diameter of the transition section 41 gradually increases in the direction away from the valve cavity 301. The valve head 10 of the flow adjustment assembly is movably disposed in the valve cavity 301, the sealing gasket 20 of the flow adjustment assembly is disposed on the side of the transition section 41 that is close to the valve cavity 301, and the communication channel 201 on the sealing gasket 20 is in communication with the first circulation channel 40.

By applying the technical solution of the present invention, the bottom of the valve seat 32 is provided with the first circulation channel 40, the first circulation channel 40 includes the transition section 41, the diameter of the transition section 41 gradually changes in the direction away from the valve cavity 301, the sealing gasket 20 is disposed on the side of the transition section 41 that is close to the valve cavity 301, and the communication channel 201 of the sealing gasket 20 is in communication with the first circulation channel 40. By using the above technical solution, a fluid in the valve cavity 301 flows into the communication channel 201 and then flows into the first circulation channel 40, and a flow velocity of the fluid in the transition section 41 changes slowly, so that the fluid does not generate relatively large noise; moreover, the sealing gasket 20 is made of a relatively soft material, and since the communication channel 201 is disposed on the sealing gasket 20, the valve head disposed in the valve cavity 301 is able to better block the communication channel 201, thereby preventing the fluid from leaking outwards from the communication channel 201 when the communication channel 201 is blocked; and since the communication channel 201 is disposed on the sealing gasket 20, and the transition section 41 is disposed on the valve seat 32, the machining of the communication channel 201 and the transition section 41 is facilitated.

In some embodiments, a cross-sectional area of the first end 411 of the transition section is A, a cross-sectional area of the second end 412 of the transition section is B, and 1.08A≥B≥0.92A. If B<0.92A, a change speed of the cross-sectional area of the transition section 41 is relatively high in a case where a length of the transition section 41 is relatively small, and the length of the transition section 41 is relatively large in a case where the change speed of the cross-sectional area of the transition section 41 is relatively low, so that the flow velocity of the fluid in the transition section 41 changes too quickly or an overall volume of the valve seat 32 is relatively large; and if B>1.08A, a change speed of the cross-sectional area of the transition section 41 is relatively high in a case where a length of the transition section 41 is relatively small, and the length of the transition section 41 is relatively large in a case where the change speed of the cross-sectional area of the transition section 41 is relatively low, so that the flow velocity of the fluid in the transition section 41 changes too quickly or an overall volume of the valve seat 32 is relatively large. Therefore, by setting 1.08A≥B≥0.92A, the flow velocity of the fluid in the transition section 41 changes relatively slowly and the overall volume of the valve seat 32 is relatively small. In some embodiments, B may be 0.92A, 0.95A, 0.99A, 1.04A, or 1.08A.

In some embodiments, the cross-sectional area of the first end 411 of the transition section is A, and a cross-sectional area of the communication channel 201 is C, and 1.02C≥A≥0.98C. If A<0.98C, after the fluid flows through the communication channel 201, a part of the fluid impacts an end surface of the first end 411 of the transition section, resulting in a decelerated flow velocity of the fluid and a relatively large impact noise; and if A>1.02C, the fluid will generate a vortex at the first end 411 of the transition section, resulting in a relatively large fluid noise. Thereby, by setting 1.02C≥A≥0.98C, not only the flow resistance of the fluid is able to be reduced, but the noise generated by the fluid is also able to be relatively small. In some embodiments, A may be 0.98C, 0.99C, C, 1.01C, or 1.02C.

In the present embodiment, the electronic expansion valve further includes a connecting pipe 401, an end of the connecting pipe 401 is connected with the valve seat 32, the connecting pipe 401 is in communication with the transition section 41, a cross-sectional area of the connecting pipe 401 is D, the cross-sectional area of the second end 412 of the transition section is B, and 1.02B≥D≥0.98B. If D<0.98B, after the fluid flows through the transition section 41, a part of the fluid impacts an end surface of the connecting pipe 401, resulting in a decelerated flow velocity of the fluid and a relatively large impact noise; and if D>1.02B, the fluid will generate a vortex at a joint of the transition section 41 and the connecting pipe 401, resulting in a relatively large fluid noise. Thereby, by setting 1.02B≥D≥0.98B, not only is the flow resistance of the fluid able to be reduced, but the noise generated by the fluid is also able to be relatively small. In some embodiments, D may be 0.98B, 0.99B, B, 1.01B, or 1.02B.

In some embodiments, the transition section 41 is of a tapered structure, a taper angle of the transition section 41 is α, and 15°≥α≥2°. If a is less than 2°, the change speed of the cross-sectional area of the transition section 41 is too slow, and the length of the transition section 41 is relatively large in a case where the cross-sectional areas of two ends of the transition section 41 meet the requirements; and if α is greater than 15°, the change speed of the cross-sectional area of the transition section 41 is relatively high, such that the flow velocity of the fluid in the transition section 41 changes too fast, resulting in a relatively large fluid noise. Therefore, by setting 15°≥α≥2°, the overall volume of the valve seat 32 is relatively small, and the fluid noise is able to be relatively small. In some embodiments, α may be 2°, 5°, 8°, 11°, 13°, or 15°.

In the present embodiment, an accommodating groove 321 is formed inside the valve seat 32, the accommodating groove 321 is formed in the side of the first circulation channel 40 that is close to the valve cavity 301, the accommodating groove 321 is in communication with the first circulation channel 40, and the sealing gasket 20 is disposed in the accommodating groove 321. By disposing the accommodating groove 321, the sealing gasket 20 is able to be installed on the valve seat 32 more stably, thereby preventing the sealing gasket 20 from moving when the fluid flows.

In the present embodiment, the first circulation channel 40 further includes a connecting section 42, the connecting section 42 is disposed on the side of the transition section 41 that is away from the valve cavity 301, an end portion of the connecting pipe 401 is disposed inside the connecting section 42 in a penetration manner, and an end of the connecting pipe 401 abuts against the second end 412 of the transition section. In this way, fluid is able to flow directly into the connecting pipe 401 from the transition section 41, so that the fluid is able to be prevented from generating excessive noise. In other embodiments, the second end of the transition section 41 is able to be flush with an end of the first circulation channel 40 that is away from the valve cavity 301, and the connecting pipe 401 is sleeved at the bottom of the valve seat 32.

In the present embodiment, the valve head 10 has a connecting end 101 and a blocking end 102, which are disposed opposite to each other, the blocking end 102 is disposed close to the communication channel 201, the first matching surface 12 is disposed on a periphery of the blocking end 102, a diameter of the first matching surface 12 gradually becomes smaller in a direction from the connecting end 101 to the blocking end 102, the second matching surface 22 is disposed on a side of the sealing gasket 20 that is close to the valve cavity 301, and the second matching surface 22 is annularly disposed on a periphery of the communication channel 201. In some embodiments, when the blocking end 102 blocks the communication channel 201, the first matching surface 12 abuts against the second matching surface 22 for cooperation. In the above structure, by changing taper angles of the first matching surface 12 and the second matching surface 22, different flow characteristic curves are able to be realized; and when the blocking end 102 blocks the communication channel 201, a matching area between the first matching surface 12 and the second matching surface 22 is relatively large, so that the blocking end 102 is able to better block the communication channel 201 to achieve the effect of low internal leakage.

In some embodiments, a side surface of the valve seat 32 is provided with a second circulation channel 402, and the second circulation channel 402 is in communication with the valve cavity 301. The fluid enters the valve cavity 301 from the second circulation channel 402 and then flows out of the communication channel 201, so that the electronic expansion valve controls the flow velocity of the fluid or controls the fluid to stop flowing.

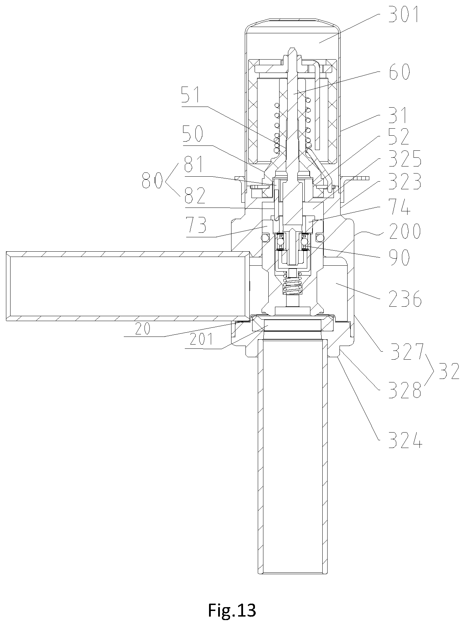

As shown in Fig. 13 to Fig. 15, Embodiment 4 of the present invention provides an electronic expansion valve, including a valve body 200, a nut seat 50, a screw rod 60, the flow adjustment assembly of the electronic expansion valve in Embodiment 1, and a rotation stop structure 80. The valve body 200 is provided with a valve cavity 301 and a communication channel 201, and the communication channel 201 is in communication with the valve cavity 301; the nut seat 50 is disposed in the valve cavity 301; the screw rod 60 is movably disposed in the nut seat 50 in a penetration manner and is in threaded connection with the nut seat 50; the sealing gasket 20 of the flow adjustment assembly is disposed in the valve cavity 301, and the sealing gasket 20 is provided with the communication channel 201; the valve head 10 of the flow adjustment assembly is sleeved on an end of the screw rod 60, the screw rod 60 is able to rotate relative to the valve head 10, and the screw rod 60 drives the valve head 10 to move to block or open the communication channel 201; and the rotation stop structure 80 is disposed between the valve body 200 and the valve head 10, and the rotation stop structure 80 is able to limit a rotation of the valve head 10 relative to the valve body 200. The screw rod 60 is in threaded connection with the nut seat 50, when the screw rod 60 rotates, the screw rod 60 linearly moves along an axis of the screw seat 50, so that the screw rod 60 drives the valve head 10 to block or open the communication channel 201. A bearing 90 is disposed between the valve head 10 and the screw rod 60, in this way, when the valve head 10 is in contact with the communication channel 201, the valve head 10 does not rotate with the screw rod 60, thereby preventing mutual abrasion between the valve head 10 and the communication channel 201 when the valve head 10 is in contact with the communication channel 201, so that the service life of the electronic expansion valve is able to be prolonged. Since the rotation stop structure 80 is disposed between the valve body 200 and the valve head 10, the valve head 10 is able to be prevented from rotating when a fluid impacts the valve head 10 and in other cases, therefore the valve head 10 is able to be avoided of generating noise while rotating. In some embodiments, the rotation stop structure 80 is able to be disposed between an inner side wall of the valve body 200 and a side wall of the valve head 10, for example, a third rotation stop surface is disposed on an inner side wall of the valve seat 32, a fourth rotation stop surface is disposed on an outer side wall of the valve head 10, and the fourth rotation stop surface cooperates with the third rotation stop surface to limit the rotation of the valve head 10.

By applying the technical solution of the present invention, the valve head 10 is sleeved on an end of the screw rod 60, the bearing 90 is disposed between the valve head 10 and the screw rod 60, the rotation stop structure is disposed between the valve seat 32 and the valve head 10, and the rotation stop structure is able to limit the rotation of the valve head 10 relative to the valve seat 32. By using the above technical solution, the rotation stop structure is disposed between the valve body 200 and the valve head 10, so that the valve head 10 is able to be prevented from rotating relative to the valve body 200, thereby preventing noise generated by the rotation of the valve head 10, and thus reducing an overall noise of the electronic expansion valve; and in addition, since the rotation stop structure is disposed between the valve body 200 and the valve head 10, mutual friction between the valve head 10 and parts such as the valve body 200 is able to be prevented when the valve head 10 rotates, so that the valve head 10 and other parts are able to be prevented from being abraded, and thus the overall service life of the electronic expansion valve is able to be prolonged.

In some embodiments, the valve body 200 includes a valve casing 31 and a valve seat 32. The valve seat 32 has a first end and a second end, which are disposed opposite to each other, the first end 323 of the valve seat is connected with the valve casing 31, the valve casing 31 cooperates with the valve seat 32 to form the valve cavity 301, and the communication channel 201 is disposed on the second end 324 of the valve seat. The valve body 200 is configured to include the valve casing 31 and the valve seat 32, which facilitates an assembly of the nut seat 50, the screw rod 60, the valve head 10 and the rotation stop structure 80 in the valve cavity 301, thereby improving the installation efficiency. In some embodiments, the valve seat 32 includes a body 327 and a seat body 328, the body 327 and the seat body 328 is able to be integrally formed or separately disposed, the communication channel 201 is disposed on the seat body 328, and the body 327 is disposed between the seat body 328 and the valve casing 31.

In the present embodiment, the nut seat 50 is provided with a threaded hole 51 and a connecting hole 52, which are in communication with each other, the connecting hole 52 is formed in a side of the threaded hole 51 that is away from the valve casing 31, and the screw rod 60 is disposed in the threaded hole 51 and the connecting hole 52 in the penetration manner; and the first end 323 of the valve seat is provided with an annular protrusion 3231, the annular protrusion 3231 is disposed in the connecting hole 52 in the penetration manner, an outer peripheral surface of the annular protrusion 3231 is adapted to the connecting hole 52, and the rotation stop structure 80 is disposed between the annular protrusion 3231 and the valve head 10. The annular protrusion 3231 is disposed in the connecting hole 52 in the penetration manner, so that the connection stability between the nut seat 50 and the valve seat 32 is able to be improved, and meanwhile the coaxiality between the nut seat 50, the valve seat 32, the seat body 328 and the communication channel 201 is able to be improved, so that the coaxiality between the screw rod 60, the valve head 10 and the communication channel 201 is able to be improved. In the above technical solution, the valve head 10 is disposed on an end of the screw rod 60 that is away from the valve casing 31, that is, the valve head 10 is disposed close to the connecting hole 52 of the nut seat 50, that is, the valve head 10 is disposed close to the annular protrusion 3231, therefore by disposing the rotation stop structure 80 between the annular protrusion 3231 and the valve head 10, the overall volume of the rotation stop structure 80 is able to be relatively small, and mutual interference between the rotation stop structure 80 and other parts is able to be prevented.

In some embodiments, the valve head 10 has a first end and a second end, which are disposed opposite to each other, the second end 72 of the valve head is disposed close to the communication channel 201, the rotation stop structure 80 includes a first rotation stop portion and a second rotation stop portion, the first rotation stop portion is disposed on the annular protrusion 3231, the second rotation stop portion is disposed on the first end 71 of the valve head, and the first rotation stop portion cooperates with the second rotation stop portion to limit the rotation of the valve head 10. In the above structures, the first end 71 of the valve head is disposed close to the nut seat 50 and the annular protrusion 3231, in this way, the second rotation stop portion is disposed on the first end 71 of the valve head, and the first rotation stop portion is disposed on the annular protrusion 3231, so that the first rotation stop portion and the second rotation stop portion are simple in structure and relatively small in volume.

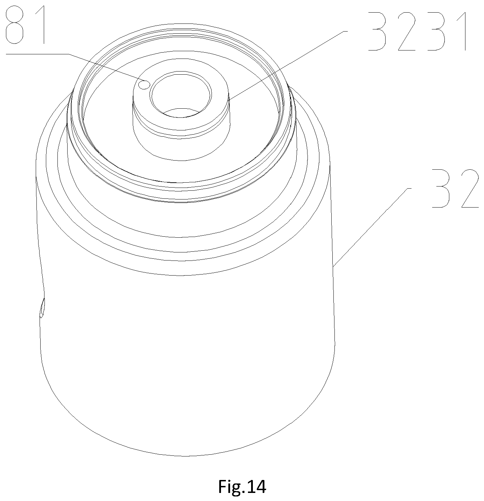

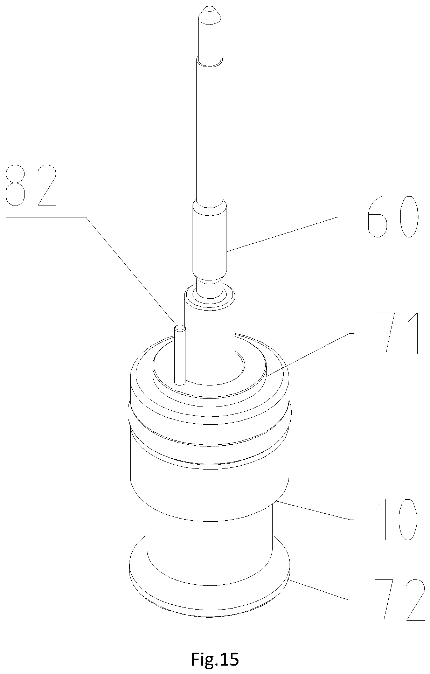

As shown in Fig. 14 and Fig. 15, the first rotation stop portion is a limiting hole 81 disposed in the annular protrusion 3231, the second rotation stop portion is a limiting rod 82 disposed on the first end 71 of the valve head, and the limiting rod 82 is disposed in the limiting hole 81 in the penetration manner. Since the limiting rod 82 is disposed in the limiting hole 81 in the penetration manner, the connection stability of the limiting rod 82 and the limiting hole 81 is relatively good, the installation is simple and convenient, and the rotation of the valve head 10 is able to be better limited. In some embodiments, an outer peripheral surface of the limiting rod 82 is attached to an inner side wall of the limiting hole 81 to prevent the valve head 10 from shaking, thereby reducing noise to a greater extent.

In some embodiments, the limiting hole 81 is disposed in an end surface of the annular protrusion 3231, the limiting hole 81 extends in an axial direction of the annular protrusion 3231, a first end of the limiting rod 82 is disposed on an end surface of the first end 71 of the valve head, and a second end of the limiting rod 82 is disposed in the limiting hole 81 in the penetration manner. In this way, the limiting rod 82 and the limiting hole 81 are able to be simply and conveniently machined, and the limiting rod 82 is easily installed in the limiting hole 81, thereby reducing the difficulty of assembling the electronic expansion valve.

In some embodiments, the valve head 10 includes a valve head body 73 and a pressing sleeve 74. The valve head body 73 has a first end and a second end, which are disposed opposite to each other, and the second end 732 of the valve head body is disposed close to the communication channel 201; the pressing sleeve 74 is fixedly connected with the first end 731 of the valve head body, a through hole 743 is formed in the pressing sleeve 74, and an end portion of the screw rod 60 is disposed in the valve head body 73 through the through hole 743 in the penetration manner, the bearing 90 is located in the valve head body 73, the bearing 90 is sleeved on the screw rod 60, the bearing 90 is disposed between the valve head 10 and the screw rod 60, a first end of the bearing 90 abuts against the screw rod 60, the pressing sleeve 74 is located on a side of the bearing 90 that is away from the communication channel 201, the pressing sleeve 74 abuts against a second end of the bearing 90, and the second rotation stop portion is disposed on the pressing sleeve 74. By using the above structures, the bearing 90 is able to be conveniently installed inside the valve head body 73, and two ends of the bearing 90 respectively abut against the screw rod 60 and the pressing sleeve 74, so that the bearing 90 is able to be limited, thereby preventing the bearing 90 from moving during a working process of the electronic expansion valve. The pressing sleeve 74 and the valve head body 73 are able to be fixedly connected in a welding manner or other manners.

In some embodiments, the pressing sleeve 74 includes a first stepped section 741 and a second stepped section 742, which are connected with each other in an axial direction of the pressing sleeve 74, the first stepped section 741 is disposed in the first end 731 of the valve head body in the penetration manner, the second stepped section 742 abuts against an end surface of the first end 731 of the valve head body, and the second rotation stop portion is disposed on the second stepped section 742. The second stepped section 742 abuts against the first end 731 of the valve head body, so that the connection stability between the pressing sleeve 74 and the valve head body 73 is better. The second rotation stop portion is able to be disposed on an end surface of the end of the second stepped section 742 that is away from the valve head body 73. An area of the end surface of the end of the second stepped section 742 that is away from the valve head body 73 is relatively large, thereby providing an installation space for the second rotation stop portion. Therefore, by disposing the second rotation stop portion on the second stepped section 742, interference between the second rotation stop portion and other parts is able to be avoided.

In some embodiments, the valve seat 32 is provided with a first hole section 325 and a second hole section 236, which are sequentially in communication with each other in an axial direction of the valve seat 32, a diameter of the first hole section 325 is less than the diameter of the second hole section 236, the first hole section 325 is located on a side of the second hole section 236 that is away from the communication channel 201, and an inner side wall of the first hole section 325 is attached to an outer peripheral surface of the first end 71 of the valve head. Since the first hole section 325 is attached to the outer peripheral surface of the first end 71 of the valve head, when the screw rod 60 drives the valve head 10 to move away from or block the communication channel 201, the inner side wall of the first hole section 325 is able to guide the valve head 10, thereby ensuring the coaxiality between the valve head 10 and the communication channel 201, and thus improving the precision of the electronic expansion valve.

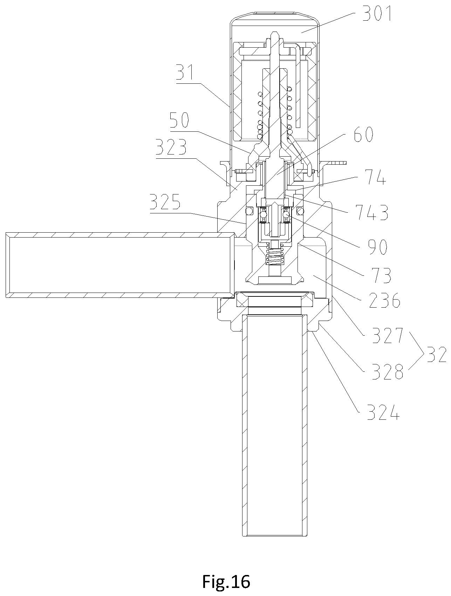

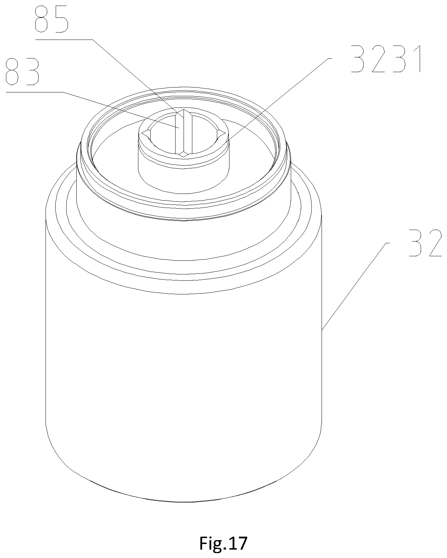

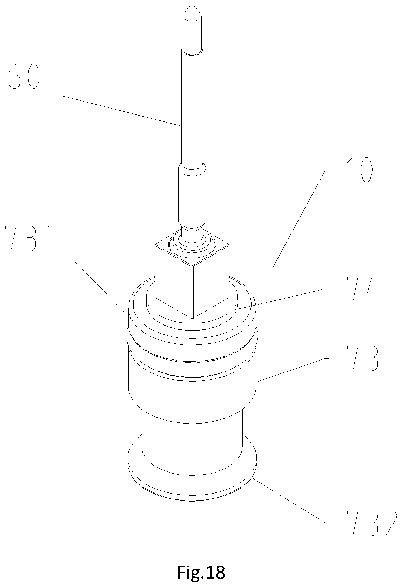

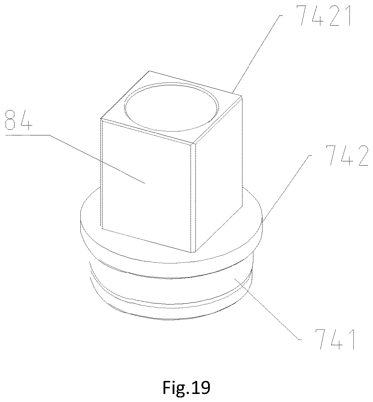

As shown in Fig. 16 to Fig. 19, Embodiment 5 of the present invention provides an electronic expansion valve, wherein a difference with Embodiment 4 lies in that the first rotation stop portion is a first rotation stop surface 83 disposed on an inner side wall of the annular protrusion 3231, the first end 71 of the valve head is disposed in the annular protrusion 3231 in the penetration manner, the second rotation stop portion is a second rotation stop surface 84 disposed on the first end 71 of the valve head, and the first rotation stop surface 83 is attached to the second rotation stop surface 84 to limit the rotation of the valve head 10 relative to the valve seat 32. By using the above structures, an interaction area between the first rotation stop surface 83 and the second rotation stop surface 84 is relatively large, so that a pressure born by the first rotation stop surface 83 and the second rotation stop surface 84 is relatively small, thus the structural stability and the cooperation stability of the first rotation stop portion and the second rotation stop portion are able to be improved, thereby improving the overall structural stability and the service life of the electronic expansion valve. In some embodiments, the second rotation stop surface 84 is disposed on the pressing sleeve 74.

In some embodiments, the second rotation stop portion includes a plurality of second rotation stop surfaces 84, the plurality of second rotation stop surfaces 84 are disposed on a side wall of the first end 71 of the valve head in a surrounding manner, a plurality of rotation stop grooves 85 are annularly disposed in an inner side wall of the annular protrusion 3231 at intervals, the rotation stop grooves 85 extend in the axial direction of the annular protrusion 3231, side walls of the rotation stop grooves 85 form the first rotation stop surfaces 83, and the plurality of the second rotation stop surfaces 84 cooperate with the first rotation stop surfaces 83 of the rotation stop grooves 85 to stop the rotation. In some embodiments, one or more rotation stop grooves 85 are disposed in the inner side wall of the annular protrusion 3231, a joint of the adjacent second rotation stop surfaces 84 is clamped in the rotation stop groove 85, and the second rotation stop surface 84 is attached to a side wall of the rotation stop groove 85 to stop the valve head 10 from rotating. In some embodiments, the end surface of the end of the second stepped section 742 that is away from the valve head body 73 is provided with a second annular protrusion 7421, and the plurality of the second rotation stop surfaces 84 are enclosed on a side wall of the second annular protrusion 7421 in the surrounding manner.

Embodiment 6 of the present invention provides an electronic expansion valve, wherein a difference with Embodiment 4 lies in that the valve body 200 further includes a guide sleeve, the guide sleeve is disposed in the valve cavity 301, the valve head 10 is disposed in the guide sleeve in the penetration manner, the guide sleeve is used for guiding the valve head 10, and the rotation stop structure 80 is disposed between the guide sleeve and the valve head 10. Since the rotation stop structure 80 is disposed on the valve head 10 and the guide sleeve, a design of the rotation stop structure 80 is facilitated, and a structural size of the rotation stop structure 80 is able to be smaller, thereby reducing a space occupied by the rotation stop structure 80. In addition, since the rotation stop structure 80 is disposed between the guide sleeve and the valve head 10, the machining and assembly of the rotation stop structure 80 are facilitated, and the machining efficiency and installation efficiency are improved.

Those ordinary skilled in the art should be aware that the above embodiments are only used to illustrate the present application and are not intended to limit the present application, and appropriate changes and modifications, made to the above embodiments within the range of essential spirit of the present application, all fall within the protection scope of the present application.

## Claims

1. A flow adjustment assembly, comprising a valve head (10) and a sealing gasket (20), wherein the sealing gasket (20) is provided with a communication channel (201), and the valve head (10) is able to move relative to the sealing gasket (20), so as to adjust a flow of a medium in the communication channel (201);
the valve head (10) is provided with a sealing surface (11) and a first matching surface (12), and the sealing gasket (20) is provided with a sealing matching surface (21) and a second matching surface (22); and
as the valve head (10) moves relative to the sealing gasket (20), a circulation area between the sealing surface (11) and the second matching surface (22) is able to be adjusted to control the flow of the medium in the communication channel (201); and moreover, under the driving of the valve head (10), the first matching surface (12) is able to extend into the communication channel (201), so as to perform flow guidance on a medium passing between the second matching surface (22) and the sealing surface (11);
or, as the valve head (10) moves relative to the sealing gasket (20), the first matching surface (12) is able to be driven to extend into the communication channel (201), and a circulation area between the first matching surface (12) and the sealing matching surface (21) is adjusted to control the flow of the medium in the communication channel (201); and moreover, under the driving of the valve head (10), the second matching surface (22) is able to perform flow guidance on the medium passing between the first matching surface (12) and the sealing matching surface (21).

2. The flow adjustment assembly as claimed in claim 1, wherein the second matching surface (22) is disposed on a periphery of the first matching surface (12) in an axial direction of the sealing gasket (20).

3. The flow adjustment assembly as claimed in claim 1, wherein when the first matching surface (12) extends into the communication channel (201), so as to perform flow guidance on the medium passing between the second matching surface (22) and the sealing surface (11), both the first matching surface (12) and the second matching surface (22) are set to be inclined plane structures, and an inclination angle of the first matching surface (12) is greater than an inclination angle of the second matching surface (22) relative to an axis of the sealing gasket (20).

4. The flow adjustment assembly as claimed in claim 3, wherein the second matching surface (22) comprises a plurality of first adjustment subsection surfaces, and the plurality of first adjustment subsection surfaces are sequentially connected.

5. The flow adjustment assembly as claimed in claim 3, wherein the inclination angle of the first matching surface (12) relative to the axis of the sealing gasket (20) is greater than 50° and less than 80° .

6. The flow adjustment assembly as claimed in claim 1, wherein both the sealing surface (11) and the sealing matching surface (21) are set to be planar structures.

7. The flow adjustment assembly as claimed in claim 1, wherein the second matching surface (22) is disposed on a periphery of the sealing matching surface (21).

8. The flow adjustment assembly as claimed in claim 1, wherein the sealing gasket (20) is provided with an avoidance notch (23), and the avoidance notch (23) is formed in a position where the sealing matching surface (21) is connected with a communication channel wall (2011) of the communication channel (201).

9. The flow adjustment assembly as claimed in claim 1, wherein the valve head (10) is provided with an avoidance groove (13), and the avoidance groove (13) is formed in a position between the sealing surface (11) and the first matching surface (12).

10. The flow adjustment assembly as claimed in claim 1, wherein when the second matching surface (22) performs flow guidance on the medium passing between the first matching surface (12) and the sealing matching surface (21), both the second matching surface (22) and the first matching surface (12) are set to be inclined plane structures, and an inclination angle of the second matching surface (22) is greater than an inclination angle of the first matching surface (12) relative to an axis of the sealing gasket (20).

11. The flow adjustment assembly as claimed in claim 1, wherein when the second matching surface (22) performs flow guidance on the medium passing between the first matching surface (12) and the sealing matching surface (21), the first matching surface (12) comprises a plurality of second adjustment subsection surfaces (121), and the plurality of second adjustment subsection surfaces (121) are sequentially connected.

12. The flow adjustment assembly as claimed in claim 1, wherein when the second matching surface (22) performs flow guidance on the medium passing between the first matching surface (12) and the sealing matching surface (21), the second matching surface (22) is set to be a planar structure.

13. An electronic expansion valve, comprising a valve body (200) and the flow adjustment assembly as claimed in any one of claims 1-12, wherein the flow adjustment assembly is installed on the valve body (200).

14. The electronic expansion valve as claimed in claim 13,
wherein the valve body (200) comprises a valve casing (31) and a valve seat (32), wherein the valve seat (32) is connected with the valve casing (31), the valve seat (32) cooperates with the valve casing (31) to form a valve cavity (301), a bottom of the valve seat (32) is provided with a first circulation channel (40), the first circulation channel (40) is in communication with the valve cavity (301), the first circulation channel (40) comprises a transition section (41), the transition section (41) comprises a first end and a second end, which are disposed opposite to each other, the first end (411) of the transition section is disposed close to the valve cavity (301), and a diameter of the transition section (41) gradually changes in a direction away from the valve cavity (301); and
the flow adjustment assembly as claimed in any one of claims 1-12, wherein the valve head (10) of the flow adjustment assembly is movably disposed in the valve cavity (301), the sealing gasket (20) of the flow adjustment assembly is disposed on a side of the transition section (41) that is close to the valve cavity (301), and the communication channel (201) on the sealing gasket (20) is in communication with the first circulation channel (40).

15. The electronic expansion valve as claimed in claim 14, wherein a cross-sectional area of the first end (411) of the transition section is A, a cross-sectional area of the second end (412) of the transition section is B, and 1.08A≥B≥0.92A.

16. The electronic expansion valve as claimed in claim 14, wherein a cross-sectional area of the first end (411) of the transition section is A, a cross-sectional area of the communication channel (201) is C, and 1.02C≥A≥0.98C.

17. The electronic expansion valve as claimed in claim 14, wherein the electronic expansion valve further comprises a connecting pipe (401), an end of the connecting pipe (401) is connected with the valve seat (32), the connecting pipe (401) is in communication with the transition section (41), a cross-sectional area of the connecting pipe (401) is D, the cross-sectional area of the second end (412) of the transition section is B, and 1.02B≥D≥0.98B.

18. The electronic expansion valve as claimed in claim 14, wherein the transition section (41) is of a tapered structure, a taper angle of the transition section (41) is a , and 15° ≥ α ≥2°.

19. The electronic expansion valve as claimed in claim 14, wherein an accommodating groove (321) is formed inside the valve seat (32), the accommodating groove (321) is formed in the side of the first circulation channel (40) that is close to the valve cavity (301), the accommodating groove (321) is in communication with the first circulation channel (40), and the sealing gasket (20) is disposed in the accommodating groove (321).

20. The electronic expansion valve as claimed in claim 17, wherein the first circulation channel (40) further comprises a connecting section (42), the connecting section (42) is disposed on a side of the transition section (41) that is away from the valve cavity (301), an end portion of the connecting pipe (401) is disposed inside the connecting section (42) in a penetration manner, and an end of the connecting pipe (401) abuts against the second end (412) of the transition section.

21. The electronic expansion valve as claimed in claim 14, wherein the valve head (10) has a connecting end (101) and a blocking end (102), which are disposed opposite to each other, the blocking end (102) is disposed close to the communication channel (201), the first matching surface (12) is disposed on a periphery of the blocking end (102), a diameter of the first matching surface (12) gradually becomes smaller in a direction from the connecting end (101) to the blocking end (102), the second matching surface (22) is disposed on a side of the sealing gasket (20) that is close to the valve cavity (301), and the second matching surface (22) is annularly disposed on a periphery of the communication channel (201).

22. The electronic expansion valve as claimed in claim 14, wherein a side surface of the valve seat (32) is provided with a second circulation channel (402), and the second circulation channel (402) is in communication with the valve cavity (301).

23. The electronic expansion valve as claimed in claim 13, comprising:
wherein the valve body (200) is provided with a valve cavity (301) and a communication channel (201), wherein the communication channel (201) is in communication with the valve cavity (301);
a nut seat (50), which is disposed in the valve cavity (301);
a screw rod (60), which is movably disposed in the nut seat (50) in the penetration manner and is in threaded connection with the nut seat (50);
the flow adjustment assembly as claimed in any one of claims 1-12, wherein the sealing gasket (20) of the flow adjustment assembly is disposed in the valve cavity (301), and the sealing gasket (20) is provided with the communication channel (201); the valve head (10) of the flow adjustment assembly is sleeved on an end of the screw rod (60), the screw rod (60) is able to rotate relative to the valve head (10), and the screw rod (60) drives the valve head (10) to move to block or open the communication channel (201); and
a rotation stop structure (80), which is disposed between the valve body (200) and the valve head (10), wherein the rotation stop structure (80) is able to limit the rotation of the valve head (10) relative to the valve body (200).

24. The electronic expansion valve as claimed in claim 23, wherein the valve body (200) comprises:
a valve casing (31); and
a valve seat (32), wherein the valve seat (32) has a first end and a second end, which are disposed opposite to each other, the first end (323) of the valve seat is connected with the valve casing (31), the valve casing (31) cooperates with the valve seat (32) to form the valve cavity (301), and the communication channel (201) is disposed on the second end (324) of the valve seat.

25. The electronic expansion valve as claimed in claim 24, wherein,
the nut seat (50) is provided with a threaded hole (51) and a connecting hole (52), which are in communication with each other, the connecting hole (52) is formed in a side of the threaded hole (51) that is away from the valve casing (31), and the screw rod (60) is disposed in the threaded hole (51) and the connecting hole (52) in a penetration manner; and
the first end (323) of the valve seat is provided with an annular protrusion (3231), the annular protrusion (3231) is disposed in the connecting hole (52) in the penetration manner, an outer peripheral surface of the annular protrusion (3231) is adapted to the connecting hole (52), and the rotation stop structure (80) is disposed between the annular protrusion (3231) and the valve head (10).

26. The electronic expansion valve as claimed in claim 25, wherein the valve head (10) has a first end and a second end, which are disposed opposite to each other, the second end (72) of the valve head is disposed close to the communication channel (201), the rotation stop structure (80) comprises a first rotation stop portion and a second rotation stop portion, the first rotation stop portion is disposed on the annular protrusion (3231), the second rotation stop portion is disposed on the first end (71) of the valve head, and the first rotation stop portion cooperates with the second rotation stop portion to limit a rotation of the valve head (10).

27. The electronic expansion valve as claimed in claim 26, wherein the first rotation stop portion is a limiting hole (81) disposed in the annular protrusion (3231), the second rotation stop portion is a limiting rod (82) disposed on the first end (71) of the valve head, and the limiting rod (82) is disposed in the limiting hole (81) in the penetration manner.

28. The electronic expansion valve as claimed in claim 27, wherein the limiting hole (81) is formed in an end surface of the annular protrusion (3231), the limiting hole (81) extends in an axial direction of the annular protrusion (3231), a first end of the limiting rod (82) is disposed on an end surface of the first end (71) of the valve head, and a second end of the limiting rod (82) is disposed in the limiting hole (81) in the penetration manner.

29. The electronic expansion valve as claimed in claim 26, wherein the first rotation stop portion is a first rotation stop surface (83) disposed on an inner side wall of the annular protrusion (3231), the first end (71) of the valve head is disposed in the annular protrusion (3231) in the penetration manner, the second rotation stop portion is a second rotation stop surface (84) disposed on the first end (71) of the valve head, and the first rotation stop surface (83) is attached to the second rotation stop surface (84) to limit a rotation of the valve head (10) relative to the valve seat (32).

30. The electronic expansion valve as claimed in claim 29, wherein the second rotation stop portion comprises a plurality of second rotation stop surfaces (84), the plurality of second rotation stop surfaces (84) are disposed on a side wall of the first end (71) of the valve head in a surrounding manner, a plurality of rotation stop grooves (85) are annularly disposed in an inner side wall of the annular protrusion (3231) at intervals, the rotation stop grooves (85) extend in an axial direction of the annular protrusion (3231), side walls of the rotation stop grooves (85) form the first rotation stop surfaces (83), and the plurality of second rotation stop surfaces (84) cooperate with the first rotation stop surfaces (83) of the rotation stop grooves (85) to stop the rotation.

31. The electronic expansion valve as claimed in any one of claims 26-30, wherein the valve head (10) comprises:
a valve head body (73), having a first end and a second end, which are disposed opposite to each other, wherein the second end (732) of the valve head body is disposed close to the communication channel (201); and
a pressing sleeve (74), which is fixedly connected with the first end (731) of the valve head body, wherein a through hole (743) is formed in the pressing sleeve (74), and an end portion of the screw rod (60) is disposed in the valve head body 73 through the through hole (743) in the penetration manner, a bearing (90) is disposed between the valve head (10) and the screw rod (60), the bearing (90) is located in the valve head body (73), the bearing (90) is sleeved on the screw rod (60), a first end of the bearing (90) abuts against the screw rod (60), the pressing sleeve (74) is located on a side of the bearing (90) that is away from the communication channel (201), the pressing sleeve (74) abuts against a second end of the bearing (90), and the second rotation stop portion is disposed on the pressing sleeve (74).

32. The electronic expansion valve as claimed in claim 31, wherein the pressing sleeve (74) comprises a first stepped section (741) and a second stepped section (742), which are connected with each other in an axial direction of the pressing sleeve (74), the first stepped section (741) is disposed in the first end (731) of the valve head body in the penetration manner, the second stepped section (742) abuts against an end surface of the first end (731) of the valve head body, and the second rotation stop portion is disposed on the second stepped section (742).

33. The electronic expansion valve as claimed in claim 26, wherein the valve seat (32) is provided with a first hole section (325) and a second hole section (236), which are sequentially in communication with each other in an axial direction of the valve seat (32), a diameter of the first hole section (325) is less than a diameter of the second hole section (236), the first hole section (325) is located on a side of the second hole section (236) that is away from the communication channel (201), and an inner side wall of the first hole section (325) is attached to an outer peripheral surface of the first end (71) of the valve head.

34. The electronic expansion valve as claimed in claim 23, wherein the valve body (200) further comprises a guide sleeve, the guide sleeve is disposed in the valve cavity (301), the valve head (10) is disposed in the guide sleeve in a penetration manner, the guide sleeve is used for guiding the valve head (10), and the rotation stop structure (80) is disposed between the guide sleeve and the valve head (10).
